(19) Europäisches Patentamt / European Patent Office / Office européen des brevets

(11) **EP 4 530 713 A1**

(12) **EUROPEAN PATENT APPLICATION**

(43) Date of publication:
**02.04.2025   Bulletin 2025/14**

(21) Application number: **23382998.5**

(22) Date of filing: **29.09.2023**

(51) International Patent Classification (IPC):
**G02F 1/35** (2006.01)

(52) Cooperative Patent Classification (CPC):
**G02F 1/353; G02F 1/3503; G02F 1/3507;**
G02F 1/354; G02F 1/365

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Fundació Institut de Ciències Fotòniques**
  **08860 Castelldefels (Barcelona) (ES)**
• **Institució Catalana de Recerca I Estudis**
  **Avançats**
  **08860 Castelldefels (Barcelona) (ES)**

(72) Inventors:
• **CUEVAS, Álvaro**
  **BARCELONA (ES)**

• **DEMUTH, Alexander**
  **BARCELONA (ES)**
• **CAMPHAUSEN, Robin**
  **BARCELONA (ES)**
• **PRUNERI, Valerio**
  **BARCELONA (ES)**

(74) Representative: **Grünecker Patent- und
Rechtsanwälte
PartG mbB
Leopoldstraße 4
80802 München (DE)**

Remarks:
Amended claims in accordance with Rule 137(2)
EPC.

(54) **A VERSATILE METHOD FOR TWO-PHOTON ENTANGLEMENT GENERATION**

(57)    Optical system (100) for the generation of entangled photons comprising a light source (101) configured to generate a first beam of coherent light, at least one first balanced beam displacement, BBD, element (1a), a nonlinear optical element (3) comprising a nonlinear optical material, and at least one second BBD element (1b), wherein the at least one first BBD element (1a) is configured to split the source beam into at least a first pump beam and a second pump beam upstream of the nonlinear optical element (3), wherein the nonlinear optical material is configured to interact via spontaneous parametric down-conversion, SPDC, with the first pump beam and the second pump beam to generate photon pairs, each photon pair comprising a signal photon and an idler photon, and wherein the at least one second BBD element (1b) is configured to combine the trajectories of the generated photon pairs downstream of the nonlinear optical element (3).

FIG. 2

EP 4 530 713 A1

**Description**

**Field of the invention**

The present invention relates to an optical system for the generation of entangled photons.

**Background**

Communications and many other fields, which explore the benefits of quantum mechanics for better performance in metrology and computing, and provable security in transmitting and storing information, are looking for robust and cost-effective means to produce, distribute and control entanglement as one of their essential tools. It has been confirmed experimentally that light offers one of the most reliable resources to reach this goal, and many technologies are already providing entangled photon states, which can be easily controlled by standard optical equipment. Photon emission can be achieved in many ways, for instance by triggering quantum dots or by second and third order light-matter interactions. The most-used method today relies on nonlinear effects, such as spontaneous parametric down conversion (SPDC).

In an SPDC process, a photon (usually denoted p for "pump") generated by a high intensity light source, such as a laser, is converted into two lower energy photons (usually denoted s for signal and i for idler, respectively) with a given probability by a nonlinear optical material. Typically, bulk material such as crystals, thin film, or waveguide structure defined by micro-/nano-fabrication are used as conversion materials. Inducing SPDC processes in the nonlinear optical material may in the following also be referred to as pumping the nonlinear optical material.

SPDC can further be classified as type-0, type-I and type-II, depending on how the pump photon polarization is converted into new polarizations for the signal and idler photons. In practice, type-0 and type-I produce photon pairs that have the same polarization, and with the same or orthogonal polarization to the pump photon, respectively. Type-II produces orthogonally polarized photon pairs. While type-II is the least efficient process, it has the narrowest spectral width of generated photons.

For a two-photon state, the most commonly used set of orthogonal and maximally entangled states (in information theory and quantum cryptography) are the well-known Bell states, which may be represented by

$$\left|\psi^{\pm}\right\rangle_{AB} = \frac{1}{\sqrt{2}}\left(\left|0\right\rangle_{A}\left|1\right\rangle_{B} \pm \left|1\right\rangle_{A}\left|0\right\rangle_{B}\right)$$

$$\left|\Phi^{\pm}\right\rangle_{AB} = \frac{1}{\sqrt{2}}\left(\left|0\right\rangle_{A}\left|0\right\rangle_{B} \pm \left|1\right\rangle_{A}\left|1\right\rangle_{B}\right).$$

Here and in the following, the generally accepted standard notation for such states is used, where "0" and "1" refer to the horizontal and vertical polarization states, respectively, which are also denoted by or "H" and "V", "+" and "-" represent diagonal and anti-diagonal polarization states, respectively, and "A" and "B" represent spatial photonic modes. In particular, modes A and B correspond to the modes that the signal and idler photons occupy, respectively (or vice versa).

The generation and distribution of Bell states is used in all currently known schemes for device-independent quantum key distribution (i.e. cryptographic protocols where the security is guaranteed by the laws of quantum mechanics), where entanglement-based protocols are used.

Systems for generating entangled photons utilizing SPDC are generally known in the art. For example, WO 2009/035585 A2 discloses a polarization-entangled photon source where a pump beam is coupled into a nonlinear type-I or type-II down-conversion crystal (DCC) which includes two waveguides. The waveguides can be formed, among other methods, by doping specific regions of the DCC with protons or atoms. In the part of the DCC facing the pump beam, one of the waveguides is bent towards the other waveguide, such that a beamsplitter-combiner (BSC) is formed which transmits and reflects 50% of an incident beam. The pump beam is coupled into the lower branch of the BSC, and is then split into two beams, which are guided by the waveguides through the DCC. The DCC further comprises a periodically poled region in which SPDC can occur; the SPDC process generates pairs of horizontally polarized signal/idler photons in each of the beams. Behind the DCC, one of the beams passes through a half-wave plate, changing the polarization state of the photon pairs to vertically polarized, and the other beam passes through a dielectric displacer. The horizontally and vertically polarized signal/idler photon pairs are then combined by a beam displacer.

WO 2020/072005 A1 describes a method to generate polarization-entangled photons where a single beam from a pump beam generates photon pairs, each entangled in momentum and position, via SPDC in a nonlinear crystal. The generation plane of the SPDC is imaged by two lenses on a wedge mirror, which splits the generated photons according to their generation position inside the nonlinear crystal. An interferometer is arranged downstream of wedge mirror to rotate the polarizations of the photons such that they are orthogonal to each other and to then recombine the photons in a polarizing beam splitter. Alternatively, WO 2020/072005 A1 teaches that a fiber-in fiber-out design can be used, where the pump laser from a single mode fiber is focused on the non-linear crystal. At the other end of the crystal, a custom half-wave plate is arranged to rotate photons generated in one semicircle of the SPDC generation plane by 90° with respect to photons generated in the other semicircle of the SPDC generation plane. After this, the correlated photon pairs are collected into a single mode optical fiber.

The known prior art systems have the disadvantage that they employ complex, highly sensitive components, such as the doped DCC in WO 2009/035585 A2, or the interferometers of WO 2020/072005 A1, or that they are restricted to fiber-based optics.

It is therefore the object of the present invention to provide an improved optical system for the generation of entangled photons.

## Summary of the invention

This object is achieved with an optical system according to claim 1. Some embodiments are set forth in the dependent claims.

In a first aspect, the optical system comprises a light source configured to generate a first beam of coherent light, at least one first balanced beam displacement, BBD, element, a nonlinear optical element comprising a nonlinear optical material, and at least one second BBD element. The at least one first BBD element is configured to split the first beam into at least a first pump beam and a second pump beam upstream of the nonlinear optical element, the nonlinear optical element is configured to interact via spontaneous parametric down-conversion, SPDC, with the first pump beam and the second pump beam to generate photon pairs, each photon pair comprising an signal photon and a idler photon, and the at least one second BBD element is configured to combine the trajectories of the generated photon pairs downstream of the nonlinear optical element. In particular, the second BBD element is configured to combine the trajectories of photon pairs generated by the first pump beam with photon pairs generated by the second pump beam. The nonlinear optical element comprises a nonlinear optical material.

Here and in the following, "configured to combine the trajectories" means that an optical element, in particular a BBD element, modifies the trajectories of at least one photon of a photon pair generated from the first pump beam and at least one photon of a second photon pair generated from the second pump beam in such a way that the spatial profiles of these photons overlap significantly at one point, in particular along the direction of propagation, in particular downstream of the optical element. In other words, photons will always pass this point, regardless in which pump beam they are generated. It is possible that both photons of a generated photon pair travel along the same trajectory, meaning that both photons pass this point. It is also possible that the trajectories of the photons from a photon pair generated in one pump beam are separated and combined with the, similarly separated, trajectories of the photons from a photon pair generated in the respective other pump beam at two different points.

In this context, "overlap significantly" is to be understood such that independent of whether photon pairs were generated from the first or second pump beam, after the combination, their respective spatial distributions overlap to such a degree that is not possible to determine from the spatial profile whether a photon pair was generated by the first or by the second pump beam.

In this context, the trajectory of a photon is the path along which a photon travels through the optical system. The wording "combine photons" may be used synonymously with the term "combine trajectories" in the present disclosure.

By way of explanation, a quantum state such as $|\Phi^\pm\rangle_{AB}$ mentioned further above is the superposition of one photon pair generated in any of the different pump beams with equal probability. The which-path information, i.e., the information about the origin of the photon pair, may be converted into another degree of freedom such as for example polarization (yielding a two-photon polarization entangled state), frequency (yielding a two-photon frequency-entangled state), orbital angular momentum (yielding a two-photon orbital angular momentum-entangled state).

Here and in the following, the term "pump beam" is used to denote a beam comprising pump photons, and the term "secondary beam" is used to denote a beam comprising photon pairs generated from pump photons via SPDC inside the nonlinear optical material. It is to be noted, that the term "generated" used herein also covers the case of a pump photon being absorbed, i.e., the case that a pump photon is converted to a pair of photons. Generally, a pump beam is a source for at least one corresponding secondary beam. Generally, a pump beam and a corresponding secondary beam will overlap at least partially inside the nonlinear optical material. It is possible that a pump beam and a corresponding secondary beam overlap downstream of the nonlinear optical material. It is also possible that a pump beam and a corresponding secondary beam are spatially separated downstream of the nonlinear optical material.

The term "track" may be used to describe a path through the optical system that comprises the trajectory of a pump photon up to the point where SPDC occurs and the trajectory of a secondary photon or photon pair originating from SPDC process. For example, a "first track" may refer to the following combined trajectories: The trajectory of the pump photon from the light source to the first BBD element, the trajectory of a pump photon in the first pump beam from the first BBD element to the point inside the nonlinear optical material where SPDC generation occurs, and the trajectory of a corresponding secondary photon, either signal or idler photon, from the point where SPDC generation occurs up to the point where a combination of generated photons occurs.

Here and in the following, the term balanced beam displacement, BBD, is used to refer to a transformation in which a single beam is reversibly split into at least two beams. The splitting can be reversed by applying a corresponding inverse BBD transformation. The inverse BBD transformation may be applied directly to the at least two beams themselves, which results in a combination of the at least two beams into one single beam. However, in the case that the at least two beams serve as pump beams for the generation of photon pairs, in particular via SPDC, the inverse BBD transformation may be applied to the secondary beams generated by the pump beams, the secondary beams comprising the generated photon pairs. In this case, the inverse BBD transformation will combine the secondary beams into a single beam.

A BBD element is an optical element that is configured to apply a BBD transformation to a single beam or an inverse BBD transformation to at least two beams. The beams generated by the BBD transformation may have different spatial propagation axes. In particular, the beams generated by the BBD transformation may be displaced laterally to one another, where lateral refers to a direction that is perpendicular to the direction of propagation of the incoming beam.

In particular, a system employing BBD may minimize walk-off effects, where the term walk-off effects comprises both temporal walk-off effects and spatial walk-off effects. When considering photon pairs generated in parallel, i.e., photon pairs generated inside the nonlinear optical material from separate pump beams but at very similar positions along the axial direction, temporal walk-off refers to delays between the arrivals of the respective photon pairs at the point where the trajectories of the photon pairs are combined. Spatial walk-off refers to differences in lateral positions of the respective photon pairs when arriving at the point where the trajectories of the photons are combined.

In other words, if a system had no temporal and no spatial walk-off effects, photon pairs generated in parallel events would arrive at the same point in space at the same time. As such, a system that minimizes walk-off effects, thus, may improve the overlap in space and time of the generated photon pairs. This may result in an improved entanglement fidelity. In the present invention, the use of BBD may enhance the chance that a photon pair, consisting of a signal photon and an idler photon, from the first pump beam was generated at or near the same axial position as a photon pair from the second pump beam. In other words, the use of BBD may enhance the chance of combining photon pairs that have been generated in parallel compared to the prior art, since generally only photon pairs from parallel events will arrive at the point of combination with sufficiently small temporal delay.

In particular, when using optical elements, such as lenses, down-stream of the nonlinear material, these elements may efficiently collect light from only a limited region in the axial dimension. In other words, parallel events may be efficiently collected by lenses and therefore the use of BBD may enhance the high entanglement fidelity with the use of collecting lenses.

In the prior art, i.e, without employing a BBD mechanism, even if tracks are spatially and temporally compensated, photons from different tracks are usually not generated in the same longitudinal location inside the crystal, such that photons from different tracks do not usually have the same position and momentum spatial correlations. This requires, among other things, more elaborate setups of, e.g., fiber optics, in the prior art to account for this. The above can be especially evident in entanglement photon sources where one or more nonlinear crystals have longitudinally variable poling, also referred to as chirped poling. If two or more SPDC generations occur in different longitudinal sections of such a crystal, the pairs from these events (also referred to as to belonging to different generations) may have spectral characteristics that can differ drastically among the multiple generations. Thus, in the prior art, photons coming from different generations can be easily distinguishable, which prevents high degrees of entanglement.

To minimize walk-off effects, the system may provide opposite or symmetric lateral displacement of the beams generated by the BBD transformation, and provide equal optical path lengths between the split trajectories.

Just by way of example, a BBD element may comprise a Savart Plate, which comprises two joint plates with off-optical axis birefringence. The Savart Plate may affect only one polarization component in the first of its prisms, while the other polarization component is affected in the second prism. If both plates are equally thick, and their lateral deviation is the same, then photons taking one or the other trajectory travel the same optical path. Utilizing a second Savart Plate to revert the displacement of the first Savart Plate may, then, result in minimal or no walk-off effects.

In the following, if a BBD element is described as splitting a beam, it is meant that the BBD element applies a BBD transformation to the beam. If a BBD element is described as combining a beam, it is meant that the BBD element applies an inverse BBD transformation. Further, the wording "combine two beams" may be used interchangeably with the wording "combine photons from two beams".

For example, if the first beam enters the at least one first BBD element at coordinates $(x,y)$, the first pump beam may exit the BBD element at coordinates $(x+dx,y)$, and the second pump beam may exit the BBD element at coordinates $(x,y+dy)$. In particular, it is possible that the beams are displaced symmetrically with respect to the overall optical axis of the optical system, which may correspond to the beam axis of the incoming first beam, i.e., $dx = dy$. Further, the k-vectors, i.e.,

the direction, of the first and second pump beams, may correspond to the k-vector of the incoming first beam. The at least one second BBD element, in this case, would apply an inverse BBD transformation such that the first pump beam is displaced by -d$x$ and the second pump beam by -d$y$.

As such, in the optical system according to the first aspect, the at least one first BBD element splits the incoming source beam into two pump beams before these beams enter the nonlinear optical material. Inside the nonlinear optical material, SPDC occurs for both the pump beams, and the generated photons, or secondary beams, exit the nonlinear optical material and enter the second BBD element. The at least one second BBD element applies a reverse BBD transformation such that the photons from the secondary beams overlap, both spatially and in time, and entanglement is possible.

In the optical system utilizing BBD according to the invention, the optical path of any pump photon that travels from the at least one first BBD element to the nonlinear optical material plus the optical path of the generated photons from this nonlinear medium to the at least one second BBD element is equal for all split and combined modes. In other words, if the at least one first BBD element splits the first beam into a first and second pump beam, the corresponding first track and the second track as defined above will have equal optical path lengths. The same applies in cases where the first beam is split into multiple pump beams; all tracks that end at a common point, i.e., where combination between generated photons occurs, will have equal optical lengths. As such, temporal walk-offs or phase shifts between photons that are simultaneously generated by SPDC by the first and second pump beams can be avoided. This increases indistinguishability between the processes, leading to a corresponding increase in entanglement fidelity.

In a second aspect, the optical system comprises a light source configured to generate a first beam of coherent light, at least one first balanced beam displacement, BBD, element, a nonlinear optical element comprising a nonlinear optical material, and a reflective element downstream of the nonlinear optical element. The at least one first BBD element is configured to split the first beam into at least a first pump beam and a second pump beam upstream of the nonlinear optical element, and the nonlinear element material is configured to interact via spontaneous parametric down-conversion, SPDC, with the first pump beam and the second pump beam to generate photon pairs, each photon pair comprising a signal photon and an idler photon. The reflective element is configured to reflect the generated photon pairs to pass back through the nonlinear optical element and the at least one first BBD element, and the at least one first BBD element is configured to combine the generated photon pairs. In particular, the first BBD element is configured to combine photon pairs generated by the first pump beam with photon pairs generated by the second pump beam.

In other words, in the second aspect the at least one first BBD element is used to both split the first beam and combine the photon pairs generated by the first pump beam and the second pump beam in a mirror-like configuration. In this case, the optical components used may behave the same way for at least the wavelengths of the pump photons and the generated signal and idler photons. As in the first aspect discussed above, the pump photons and the generated photon pairs travel, after the split by the at least one first BBD element, the same optical path until they are combined again.

By utilizing BBD elements to apply BBD and inverse BBD transformations to the light beams, the optical system can be built from common optical components, enabling a mechanically robust and straightforward implementation. Because of this, a high entanglement fidelity can be obtained. Further, the use of BBD elements allows the optical system to be constructed in a highly compact way, on the scale of photonic integrated circuits.

The at least one first BBD element may be configured to split the first beam such that the polarization of the first pump beam is orthogonal to the polarization of the second pump beam. Utilizing such a BBD element obviates the need for further optical components to manipulate the polarization of the first and second pump beams in order to obtain entanglement conditions.

The at least one first and/or the at least one second BBD element may comprise a Savart Plate, SP. In particular, the first and/or second BBD element may be a SP. A Savart plate comprises two birefringent crystals which split the first beam into the first and second pump beams. In particular, if the polarization of the first beam is given by

$$|\varphi\rangle_{AB} = \frac{(\alpha|H\rangle + \beta|V\rangle)}{\sqrt{\alpha^2 + \beta^2}}$$

with H and V denoting horizontal polarization components, and the first beam entering the SP at coordinates ($x,y$) in the plane transverse to the beam direction, the SP may displace the H component of the first beam to ($x$+d$x,y$) and the V component of the first beam to ($x,y$+d$y$), where the displacements d$x$ and dy may be determined, inter alia, by the orientation of the SP with respect to the polarization of the incoming beam. In other words, the SP will generate the first and second pump beams with orthogonal polarizations, while keeping the k-vector of the first beam. As such, a SP is a simple and robust implementation of the at least one first and/or the at least one second BBD element.

The displacements dx and dy may be 10 $\mu$m to 10 mm. Such a displacement allows a clear separation of the first and second pump beams. In particular, the separation may be adapted such that it is easy to arrange subsequent optical components, in particular spatially dependent polarization rotation, SDPR, elements, in a way that they can interact with both beams separately. For example, the displacement may be such that the first and second pump beams pass through different lateral domains of a segmented half-wave plate. It should be noted that it is possible that the separation of the first and second pump beams is changed by suitable optical elements, for example lenses, before entering the nonlinear optical material. For example, the separation could be on the order of mm before entering a SDPR element, and could be changed to an order of $\mu$m before entering the nonlinear optical material. On these scales, changes over the nonlinear optical material may be negligible, such that the first and second pump beams pass through near-identical regions of the nonlinear optical material. As such, simultaneous generation of nonlinear photon pair generation events in both beams may occur, such that the generated photon pairs from both events are indistinguishable.

In particular, the lateral separation between the first and second pump beams may be 10 $\mu$m to 10 mm when the first and second pump beams leave the at least one first BBD element. Alternatively or additionally, the lateral separation between the first and second pump beams may be 10 $\mu$m to 10 mm, in particular 100 $\mu$m to 2 mm, when the first and second pump beams enter the nonlinear optical element.

The pump beams may, in particular, have a Gaussian beam profile. They may be characterized by a respective optical axis and diameter of the beam. The lateral separation between the first and second pump beams may be the distance between the respective central optical axes of the first pump and second pump beams.

It is possible that the optical axes of the first and second pump beams are not parallel. In that case, the optical axes of the first and second pump beams may cross, in particular inside the nonlinear optical element.

For example, the first beam may enter the at least one first BBD element at point $(x,y)$ with an initial polarization of

$$|\varphi\rangle = |H(x,y)\rangle = \frac{1}{\sqrt{2}}\left(|+(x,y)\rangle + |-(x,y)\rangle\right).$$

If the beam first passes through a first SP rotated at a rotation angle of 45° with respect to the beam's initial polarization, the state will become

$$|\varphi_1\rangle = \frac{1}{\sqrt{2}}\left[\left|+\left(x+\frac{dx}{\sqrt{2}},y+\frac{dy}{\sqrt{2}}\right)\right\rangle + \left|-\left(x-\frac{dx}{\sqrt{2}},y+\frac{dy}{\sqrt{2}}\right)\right\rangle\right] =$$

$$= \frac{1}{\sqrt{2}}\left[\left(\left|H\left(x+\frac{dx}{\sqrt{2}},y+\frac{dy}{\sqrt{2}}\right)\right\rangle + \left|V\left(x+\frac{dx}{\sqrt{2}},y+\frac{dy}{\sqrt{2}}\right)\right\rangle\right)\right.$$

$$\left. + \left(\left|H\left(x-\frac{dx}{\sqrt{2}},y+\frac{dy}{\sqrt{2}}\right)\right\rangle + \left|V\left(x-\frac{dx}{\sqrt{2}},y+\frac{dy}{\sqrt{2}}\right)\right\rangle\right)\right].$$

It can be seen that this state corresponds to two beams at positions $\left(x+\frac{dx}{\sqrt{2}},y+\frac{dy}{\sqrt{2}}\right)$ and $\left(x-\frac{dx}{\sqrt{2}},y+\frac{dy}{\sqrt{2}}\right)$, respectively.

Additionally or alternatively, the at least one first BBD element may comprise a waveguide beam splitter. The waveguide beam splitter may be provided by femtosecond-laser writing on a substrate, in particular a glass substrate, for example as described in Davis et al., "Writing waveguides in glass with a femtosecond laser", Optics Letters Vol. 21, Issue 21, pp. 1729-1731 (1996). In particular, the at least one first BBD element may comprise cascaded waveguide splitters in a monolithic block of material, e.g., glass. In particular, by fabricating a BBD element utilizing such cascaded waveguide splitters, taking care in fabrication to balance all optical paths, one or multiple BBD elements may be realized as waveguides in photonic integrated circuits. Such a waveguide beam splitter may provide a reliable way of dividing a light beam into two new ones with identical polarizations.

Additionally or alternatively, the at least one first BBD element may comprise one or more multi-core optical fibers. Utilizing such fibers, the spacing between the non-linear photon generation processes in the nonlinear optical material may be determined by the core-to-core distances in the multi-core optical fibers. As such, the spacing of the photon generation processes may be reliably determined by the selection of the optical fiber.

Additionally or alternatively, the at least one first BBD element may comprise one or more beam splitters. The one or more beam splitters may be configured to split the first beam into multiple pump beams, which may in turn be fed into one or more SPs, waveguide beam splitters or multi-core fibers. In particular, the beam splitters may be implemented on a photonic integrated circuit.

The nonlinear optical material may comprise, in particular consist of, a single monolithic nonlinear optical crystal, and the first pump beam and the second pump beam may both interact with the single monolithic nonlinear optical crystal. Using a single monolithic nonlinear optical crystal further increases the indistinguishability between the SPDC processes in the first pump beam and the second pump beam, leading to a corresponding increase in entanglement fidelity.

The optical system may further comprise one or more spatially dependent polarization rotation, SDPR, elements, in particular one or more segmented half-wave plates and/or one or more metamaterial-based components with multiple lateral domains. These optical elements may be used to adjust the polarizations of the respective beams to match the optical axes of the BBD elements and/or the nonlinear optical material. One or more SDPR elements may be arranged upstream of any of the other components of the optical system. In particular, one or more SDPR elements may be arranged upstream, in particular directly upstream, of the nonlinear optical element and/or in between BBD elements to adapt the polarization states to match the optical elements.

The segmented half-wave plates may comprise two or more zero-order half-wave plates rotated to different angles, and arranged such that different parts of the segmented half-wave plate provide different rotations on an input beam. The two or more zero-order half-wave plates may be cut and glued together.

In particular, the combination of SPs for the at least one first and at least one second BBD elements with an SDPR element allows for a straightforward and robust way of generating Bell-like states. For example, the first beam may be split by a first SP rotated by 45° into a first pump beam and a second pump beam that pump the nonlinear optical material at positions $\left(x + \frac{dx}{\sqrt{2}}, y + \frac{dy}{\sqrt{2}}\right)$ and $\left(x - \frac{dx}{\sqrt{2}}, y + \frac{dy}{\sqrt{2}}\right)$, as described above. In the nonlinear optical material, if parallel type-0 or type-I SPDC processes occur in the first and second pump beams, generating photons with H polarization, the state of the generated photons may be written as

$$|\psi_0\rangle = \frac{1}{\sqrt{2}}\left[\left(\left|H\left(x + \frac{dx}{\sqrt{2}}, y + \frac{dy}{\sqrt{2}}\right)\right\rangle, \left|H\left(x + \frac{dx}{\sqrt{2}}, y + \frac{dy}{\sqrt{2}}\right)\right\rangle\right)\right.$$

$$\left. + \left(\left|H\left(x - \frac{dx}{\sqrt{2}} + dx, y + \frac{dy}{\sqrt{2}}\right)\right\rangle, \left|H\left(x - \frac{dx}{\sqrt{2}}, y + \frac{dy}{\sqrt{2}}\right)\right\rangle\right)\right].$$

Utilizing a SDPR, the states $\left|H\left(x + \frac{dx}{\sqrt{2}}, y + \frac{dy}{\sqrt{2}}\right)\right\rangle$ and $\left|H\left(x - \frac{dx}{\sqrt{2}}, y + \frac{dy}{\sqrt{2}}\right)\right\rangle$ may be transformed into $\left|+\left(x + \frac{dx}{\sqrt{2}}, y + \frac{dy}{\sqrt{2}}\right)\right\rangle$ and $\left|-\left(x + \frac{dx}{\sqrt{2}}, y + \frac{dy}{\sqrt{2}}\right)\right\rangle$, respectively. If a second SP is placed at a 135° rotation after the SDPR, the state may be transformed into

$$|\psi_1\rangle = \frac{1}{\sqrt{2}}\left[|+(x, y), +(x, y)\rangle + |-(x, y), -(x, y)\rangle\right],$$

which is a Bell-like state sharing a single spatial mode. Such a state is also known as a NOON state. As such, with such an optical system an entangled photonic state, which can be represented as a polarization-entangled two-photon NOON state, may be generated. It should be noted that the described use of SPs as BBD elements is merely exemplary and the effect may also be achieved with other types of BBD elements as described above.

In case the optical system comprises the at least one second BBD element, it may further comprise at least one third BBD element, wherein the at least one second BBD element is configured to combine the trajectory of a signal photon generated from the first pump beam and the trajectory of an idler photon generated from the second pump beam, or vice versa, to generate a first photonic mode, the at least one second BBD element is configured to displace the trajectory of the corresponding idler photon generated from the first pump beam and the trajectory of the corresponding signal photon generated from the second pump beam, or vice versa, by a predetermined lateral distance, the at least third BBD element is configured to combine the trajectory of the corresponding idler photon generated from the first pump beam and the trajectory of the corresponding signal photon generated from the second pump beam, or vice versa, to generate a second photonic mode, and wherein the first photonic mode and the second photonic mode encode a two-mode Bell state.

Consistent with the definition provided further above, this means that the at least one second BBD element modifies the trajectory of one photon, signal or idler, from a photon pair that may be generated from the first pump beam and the trajectory of one photon that may be generated from the second pump beam in such a way that these trajectories intersect. The at least one second BBD element further modifies the trajectories of the corresponding other photons such that they are displaced laterally. The at least one third BBD element then modifies the trajectories of the corresponding other photons such that they overlap significantly.

In particular, in that case the nonlinear optical material may be configured to generate photons via a type-II SPDC process. The optical system may further comprise one or more SDPR elements. It may also comprise one or more reflective components, in particular mirrors.

For example, the first beam may be split by a first SP rotated by 45° into a first pump beam and a second pump beam that pump the nonlinear optical material at positions $\left(x + \frac{dx}{\sqrt{2}}, y + \frac{dy}{\sqrt{2}}\right)$ and $\left(x - \frac{dx}{\sqrt{2}}, y + \frac{dy}{\sqrt{2}}\right)$, as described above. In the nonlinear optical material, if parallel type-II SPDC processes occur in the first and second pump beams, the state of the generated photons may be written as

$$|\psi_2\rangle = \frac{1}{\sqrt{2}}\left[\left(\left|H\left(x + \frac{dx}{\sqrt{2}}, y + \frac{dy}{\sqrt{2}}\right)\right\rangle, \left|V\left(x + \frac{dx}{\sqrt{2}}, y + \frac{dy}{\sqrt{2}}\right)\right\rangle\right)\right.$$

$$\left. + \left(\left|H\left(x - \frac{dx}{\sqrt{2}} + dx, y + \frac{dy}{\sqrt{2}}\right)\right\rangle, \left|V\left(x - \frac{dx}{\sqrt{2}}, y + \frac{dy}{\sqrt{2}}\right)\right\rangle\right)\right].$$

Utilizing a SDPR, the states $\left|H\left(x + \frac{dx}{\sqrt{2}}, y + \frac{dy}{\sqrt{2}}\right)\right\rangle, \left|V\left(x + \frac{dx}{\sqrt{2}}, y + \frac{dy}{\sqrt{2}}\right)\right\rangle, \left|H\left(x - \frac{dx}{\sqrt{2}}, y + \frac{dy}{\sqrt{2}}\right)\right\rangle$ and $\left|V\left(x - \frac{dx}{\sqrt{2}}, y + \frac{dy}{\sqrt{2}}\right)\right\rangle$ may be transformed into $\left|+\left(x + \frac{dx}{\sqrt{2}}, y + \frac{dy}{\sqrt{2}}\right)\right\rangle, \left|-\left(x + \frac{dx}{\sqrt{2}}, y + \frac{dy}{\sqrt{2}}\right)\right\rangle, \left|+\left(x - \frac{dx}{\sqrt{2}}, y + \frac{dy}{\sqrt{2}}\right)\right\rangle$ and $\left|-\left(x - \frac{dx}{\sqrt{2}}, y + \frac{dy}{\sqrt{2}}\right)\right\rangle$, respectively.

If a second SP is placed at a 135° rotation after the SDPR, the state may be transformed into

$$|\psi_3\rangle = \frac{1}{\sqrt{2}}\left[\left|+(x,y), -\left(x + \frac{2dx}{\sqrt{2}}, y\right)\right\rangle + \left|+\left(x - \frac{2dx}{\sqrt{2}}, y\right), -(x,y)\right\rangle\right],$$

Since a spatial overlap is present between + and - components at position $(x,y)$, a first polarization-entangled mode A may be extracted here, for example with a reflective component, in particular a mirror.

For the remaining components of the state, a third SP may be arranged further downstream with a rotation of 45°, combining the remaining + and - components to generate a second polarization-entangled mode B. The state after the third SP may then be described as

$$|\psi_4\rangle = \frac{1}{\sqrt{2}}\left[\left|+(x,y), -\left(x, y + \frac{2dy}{\sqrt{2}}\right)\right\rangle + \left|+\left(x, y + \frac{2dy}{\sqrt{2}}\right), -(x,y)\right\rangle\right] = \frac{1}{\sqrt{2}}\left[|+_A, -_B\rangle + e^{i\theta}|-_A, +_B\rangle\right]$$

This state corresponds to a Bell state, which is split into two distinguishable modes, where $\theta$ denotes a phase between the polarization states.

It can be seen that $|\psi_4\rangle$ can describe two beams A, B at different positions, which each may be directed to, e.g., a different receiving station for further use, in particular for quantum communication or quantum cryptography.

In the case that the optical system is configured to generate a polarization-entangled two-photon NOON state as described by $|\psi_1\rangle$ described further above, the system may further comprise one or more optical elements downstream of the second BBD element which are configured to apply a frequency splitting and/or momentum splitting and/or splitting through spatial light modulation to the combined beam. By utilizing such elements, the $|\psi_1\rangle$ state may be transformed into a state which is analogous to the state $|\psi_4\rangle$ described above, i.e., a Bell state that describes two beams at different positions.

For example, the optical system may comprise a dichroic mirror downstream of the second BBD element. The dichroic mirror may be configured to transmit one half of the spectrum of the beam emitted from the second BBD into a first mode A, while reflecting the other half into a second mode B. The frequencies of the photons involved in SPDC processes have the relationship $\omega_p = \omega_s + \omega_i$ due to energy conservation, where $\omega_p$, $\omega_s$ and $\omega_i$ denote the frequencies of the pump light, the signal photon and the idler photon, respectively. Due to this relationship, after the dichroic mirror, each signal photon in mode A will have a corresponding idler photon in mode B, or vice versa. This will lead to a state that can be written as

$$|\psi_5\rangle = \frac{1}{\sqrt{2}}\left[|+_A, +_B\rangle + e^{i\theta}|-_A, -_B\rangle\right].$$

This state may then be transformed into one corresponding to $|\psi_4\rangle$ by rotating the polarization of mode A or mode B by 90°. An alternative approach leading to the same state $|\psi_5\rangle$ may be to utilize a wavelength divisor multiplexer to couple out photons in one wavelength range including either $\omega_s$ or $\omega_i$ out of the beam emitted from the second BBD. In that way, either signal or idler photons are coupled out into a photonic mode A. The corresponding other of the signal or idler photons remaining in the beam may form photonic mode B. The overall state may then again be given by $|\psi_5\rangle$. It is possible that the photons of state A are further distributed to a first receiver, and that the photons of state B are further distributed to a second receiver. For example, the first and second receiver may be part of an optical system for quantum communication.

Alternatively or additionally, momentum splitting of the beam emitted from the second BBD may be used to transfer idler photons into one photonic mode A and signal photons into another photonic mode B. Again, due momentum conservation, each signal photon in mode A will have a corresponding idler photon in mode B, or vice versa, leading to a state that can be described by $|\psi_5\rangle$. The momentum splitting may be achieved, e.g., by placing a knife-edge mirror such that it only covers half of the emitted beam.

Alternatively or additionally, the beam emitted from the second BBD may be split via spatial light modulation. For example, a first spatial light modulator configured to act only on one polarization, e.g., + or -, may be placed in the beam. For example, a corresponding phase mask may be utilized by the spatial light modulator, where the pattern may be designed to generate multiple focused spots from the beam. A half-wave plate may then be used to rotate the polarizations of the individual states. A second spatial modulator may then be used with the same phase mask to act on the other polarization, generating two beam spots which correspond to photonic modes A and B respectively. The state of the two modes may be represented by $|\psi_5\rangle$. The first and second spatial light modulators may comprise an electrically-addressed spatial light modulator and/or an optically-addressed spatial light modulator.

Alternatively or additionally, it is possible to generate corresponding photonic modes A and B after signal and idler photons have been generated in the nonlinear optical material using a time-reversed Hong-Ou-Mandel setup. For example, a setup similar to the one described in Chen et. al., "Polarization Entanglement by Time-Reversed Hong-Ou-Mandel Interference", Phys. Rev. Lett. 121, 200502, may be used to generate the photonic modes A and B.

It is to be understood that these examples may be generalized to different beam locations and angles. As indicated earlier, the use of BBD transformations and inverse BBD transformations is applicable to any optical system where the optical path length of the resulting beams is equal through the optical system.

Further, using SPs as BBD elements in an embodiment where a Bell state as given by $|\psi_4\rangle$ above is generated has the further advantage that the phase factor θ may be adjusted easily by adjusting a tilt angle of one of the second and third SPs.

The at least one first BBD element may be configured to split the first beam into more than two beams. For example, the at least one first BBD element may comprise two or more SPs arranged in sequence, where the first SP splits the first beam into two pump beams, the second SP splits the two newly generated pump beams, and so on. Alternatively, the at least one first BBD element may comprise a waveguide beam splitter as described above, which is configured to split the incoming first beam into multiple pump beams.

By configuring the at least one first BBD element to split the first beam into more than two beams, it is possible to pump the nonlinear optical material at multiple positions.

As shown above, for every two beams split with a BBD element, simultaneous SPDC generation in both beams leads to photons that can be combined into a two-mode Bell state as for example indicated by $|\psi_4\rangle$ above. As such, by using the first BBD to generate 2N beams, it is possible to multiplex up to N pairs of photons in parallel.

For example, the first beam may been split by a first SP rotated by 45° into a first pump beam and a second pump beam that pump the nonlinear optical material at positions $\left(x + \frac{dx}{\sqrt{2}}, y + \frac{dy}{\sqrt{2}}\right)$ and $\left(x - \frac{dx}{\sqrt{2}}, y + \frac{dy}{\sqrt{2}}\right)$, as described above. If a second SP is placed downstream of the first SP with 0° rotation, but upstream of the nonlinear optical material, the state will become

$$|\varphi_2\rangle = \frac{1}{\sqrt{2}}\left[\left(\left|H\left(x+\frac{dx}{\sqrt{2}}, y+\frac{dy}{\sqrt{2}}\right)\right\rangle + \left|V\left(x+\frac{dx}{\sqrt{2}}, y+\frac{dy}{\sqrt{2}}+dy\right)\right\rangle\right)\right.$$

$$\left.+ \left(\left|H\left(x-\frac{dx}{\sqrt{2}}+dx, y+\frac{dy}{\sqrt{2}}\right)\right\rangle + \left|V\left(x-\frac{dx}{\sqrt{2}}, y+\frac{dy}{\sqrt{2}}+dy\right)\right\rangle\right)\right].$$

This state corresponds to four beams at positions

$$\left(x-\frac{dx}{\sqrt{2}}, y+\frac{dy}{\sqrt{2}}\right), \left(x-\frac{dx}{\sqrt{2}}, y+\frac{dy}{\sqrt{2}}+dy\right), \left(x-\frac{dx}{\sqrt{2}}+dx, y+\frac{dy}{\sqrt{2}}\right)$$ , and $$\left(x-\frac{dx}{\sqrt{2}}, y+\frac{dy}{\sqrt{2}}+dy\right)$$ , respectively. As such, the nonlinear optical material may be pumped at different positions by four pump beams generated from the initial first beam. By using appropriate downstream BBD elements to combine the respective beams or the corresponding secondary beams generated via SPDC, multiplexing of the generation of entangled photons may be achieved in an easy manner.

The optical system may further comprise a bandpass filter arranged upstream, in particular directly upstream, of the nonlinear optical material. The bandpass filter may be used to separate fluorescent light from the pump beams before the pump beams interact with the nonlinear optical material. The optical system may further comprise one or more optical filters downstream of the nonlinear optical material. These one or more optical filters may be used to remove the pump beams. The one or more optical filters may comprise longpass filters and/or bandpass filters and/or dichroic mirrors.

The nonlinear optical material may comprise, in particular consist of, a periodically poled crystal, in particular potassium titanyl phosphate, KTP, or lithium niobate LN. In particular, the nonlinear optical material may be a monolithic crystal of KTO or LN.

The nonlinear optical material may comprise, in particular consist of, a single domain crystal, in particular beta barium borate, BBO. In particular, the nonlinear optical material may be a monolithic BBO crystal.

The optical system may further comprise one or more additional optical elements. The additional optical elements may comprise one or more lenses and/or one or more mirror-like elements. The one or more optical elements may be used as necessary for proper beam guidance and beam forming. In particular, the optical system may comprise one or more lenses placed upstream and/or downstream of the nonlinear optical element to focus the first beam and/or the first pump beam and/or the second pump beam and/or secondary beams. This way, pump efficiency inside the nonlinear optical material and/or collection efficiency of emitted photons may be improved. Further, lenses may be used to improve frequency splitting and/or momentum splitting and/or spatial modulation splitting of the emitted beams as described further above. It should be noted that the term lens is used here as a general term encompassing optical elements used to focus light, e.g., bulk refractive lens, Fresnel lens, microlens, microlens array or spatial light modulator.

It is to be noted that every BBD element in the optical system may have one or more properties of the first BBD element as described above. As has already been noted, BBD elements can be freely combined in the optical system as long as they provide, in sum, a BBD transformation upstream of the nonlinear optical element and a corresponding inverse BBD transformation downstream of the nonlinear optical element.

One or more of the optical elements, in particular all optical elements, of the optical system may be implemented as integrated photonic circuits.

The invention further provides the use of an optical system for the generation of entangled photons. The optical system comprises one or more of the features mentioned above.

**Brief description of the drawings**

Embodiments will now be described in combination with the enclosed figures.

Figure 1            schematically shows an optical system for the generation of entangled photons;

Figure 2            schematically shows the beam diagram of an optical system for the generation of entangled photons;

Figures 3a and 3b    schematically show modifications of the optical system of Figure 2;

Figures 4a and 4b    schematically show modifications of the optical system of Figure 2;

Figure 5            schematically shows an optical system for the generation of entangled photons;

Figure 6          schematically shows an optical system for the generation of entangled photons;

Figure 7          schematically shows an optical system for the generation of entangled photons;

Figure 8          schematically shows an optical system for the generation of entangled photons;

Figure 9          schematically shows an optical system for the generation of entangled photons; and

Figure 10         schematically shows part of an optical system for the generation of entangled photons.

**Detailed description of the invention**

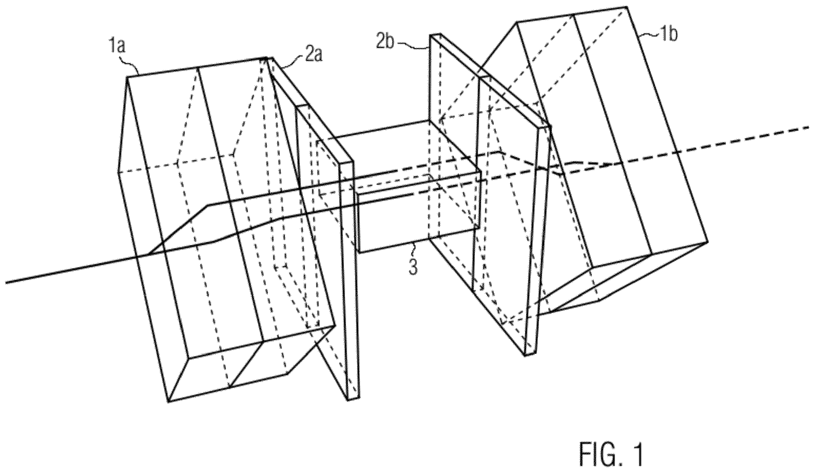

Figure 1 schematically shows a first embodiment of an optical system 100 for the generation of entangled photons. The optical system 100 comprises a laser 101 (not shown in Figure 1) as source for a beam of coherent light, a first Savart plate 1a, a first spatially dependent polarization rotation element 2a, a nonlinear optical element 3, a second SDPR 2b, and a second SP 1b. The nonlinear optical element 3 is a monolithic nonlinear optical crystal, in which type-0 or type-I SPDC can occur. The first and second SDPRs are realized as segmented half-wave plates. The solid and dashed lines indicate the beams before and after generation of photon pairs inside the optical crystal, respectively. In other words, the solid lines indicate pump beams, the dashed lines indicate secondary beams.

In operation, the first SP 1a splits the beam of coherent light from the laser into a first pump beam and a second pump beam via a BBD transformation. The first SDPR 2a rotates the polarizations of the first and second pump beams to match the crystal axis of the nonlinear optical crystal 3. Inside the nonlinear optical crystal 3, type-0 or type-I SPDC processes generate photon pairs comprising signal and idler photons. After the secondary beams comprising the generated photon pairs exit the nonlinear optical crystal 3, the second SDPR element 2b rotates the polarizations of the secondary beams to match the axis of the second SP 1b. The second SP 1b combines the trajectories of photon pairs generated by the first pump beam and of photon pairs generated by the second pump beam via an inverse BBD transformation, such that a polarization entangled photonic mode is generated. This polarization-entangled mode can be represented by a NOON state, as described with $|\psi_1\rangle$ further above.

In more detail, Figure 1 illustrates that photons pairs are generated along two tracks inside the nonlinear optical crystal 3, due to the splitting of the beam of coherent light by the first SP 1a. The origin of a photon pair remains unknown if there is no temporal or spatial walk-off. The first SDPR 2a is used before the nonlinear optical crystal 3 to match both pump beams with the nonlinear axis of the nonlinear optical crystal 3, while the second SDPR 2b is used after the nonlinear optical crystal 3 to ensure that the polarization of SPDC light (i.e., the polarization of photons generated by SPDC) from the first track is orthogonal to the polarization of SPDC light in the second track.

The second SP 1b displaces any X-polarized light in the first track and any Y-polarized light in the second track (or vice versa) such that their trajectories intersect, i.e., they end up in one shared track. As such, there is a single output beam, where spatial characteristics are common for both orthogonal polarizations, apart from a relative phase factor $\varphi$. Here, "X" and "Y" denote any linear polarization (for instance Horizontal and Vertical), as long as they are orthogonal.

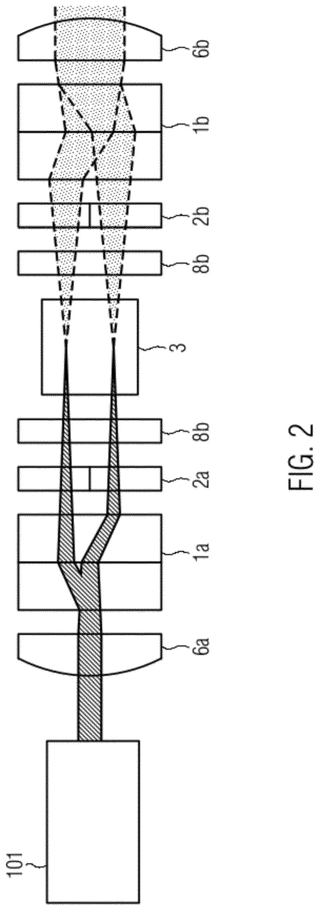

Figure 2 schematically shows a beam diagram of an embodiment of an optical system 100 similar to that of the embodiment shown in Figure 1. Compared to the embodiment shown in Figure 1, the optical system shown in Figure 2 further comprises a first lens 6a upstream of the first SP 1a, a first filter 8a before the nonlinear optical material 3, a second filter 8b downstream of the nonlinear optical element 3, and a second lens 6b downstream of the second SP 1b. Like the optical system 100 illustrated in Figure 1, the polarization-entangled mode generated by the optical system 100 shown in Figure 2 can be represented by a NOON state, as described with $|\psi_1\rangle$ further above. It is to be noted that the beam diagram shows the envelopes of the respective beams with the solid and dashed lines. It can be seen that the first beam is split into the first and second pump beams by the first BBD element 1. Further, it can be seen that secondary beams are generated inside the nonlinear optical element 3, and that the secondary beams are combined into one beam by the second BBD element 1b. To further illustrate this, the first beam and the pump beams are shown as hatched, and the secondary beams are shown as dotted.

As such, the beam exiting the second SP 1b and the lens 6b in Figure 2 correspond to the single beam exiting the SP 1b in Figure 1.

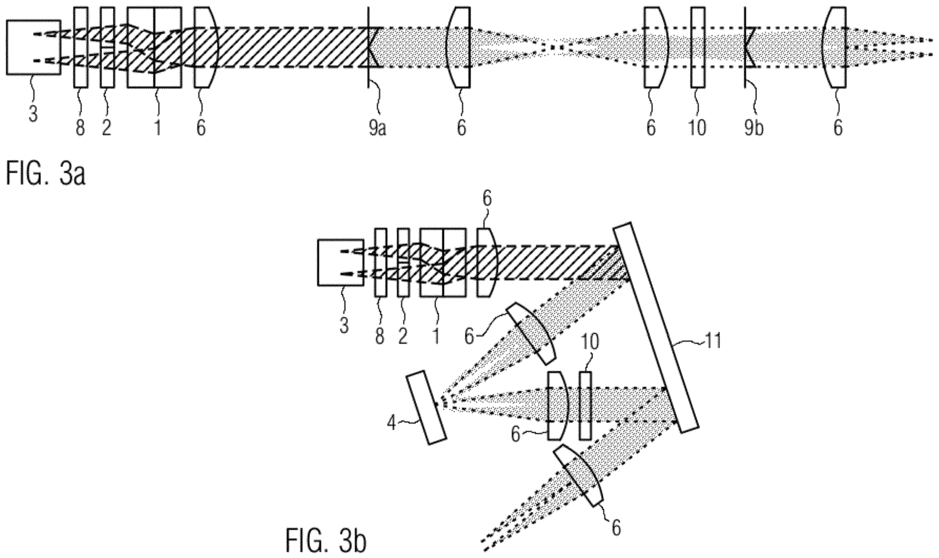

Figures 3a and 3b schematically show a beam diagram of a modification of the embodiment of an optical system 100 illustrated in Figure 2. In the embodiments shown in Figures 3a and 3b, the NOON output state of the system shown in Figure 2 can be transformed into a Bell state as described with $|\psi_4\rangle$ further above via splitting of the output beam of the embodiment of Figure 2 via spatial light modulation as described further above. In particular, Figures 3a and 3b show the beam diagram downstream of the nonlinear optical element 3.

Compared to the embodiment shown in Figure 2, the optical system shown in Figure 3a further comprises a system of lenses 6, transmission-based spatial light modulators 9a and 9b, and a half-wave plate 10. The first spatial light modulator 9a and the second spatial light modulator 9b are each configured to act only on one polarization component. The half-wave plate 10 is configured to rotate the polarization components between the first spatial light modulator 9a and the second spatial light modulator 9b, and the lenses are configured to focus the beams appropriately. It can be seen that the optical system outputs two beams, which may be represented by a Bell state as described with $|\psi_4\rangle$ further above. In Figure 3a, downstream of the first spatial light modulator 9a, the beam envelope of one of the polarization components is indicated by the dotted line. The beam envelope of the other polarization component is indicated by the dotted area. Upstream of the first spatial light modulator 9a, the hatched area indicates that the beam comprises both polarization components.

The optical system shown in Figure 3b comprises a system of lenses 6, a reflection-based spatial light modulator 11, a mirror 4, and a half-wave plate 10. The reflection-based spatial light modulator 11 is configured to act only on one polarization component. The mirror 4, downstream of the reflection-based spatial light modulator 11 is configured to reflect the beam back towards the reflection-based spatial light modulator 11. The half-wave plate 10 is configured to rotate the polarization components between the mirror 4 and the reflection-based spatial light modulator 11. The lenses 6 are configured to focus the beams appropriately. It can be seen that the optical system outputs two beams, which may be represented by a Bell state as described with $|\psi_4\rangle$ further above. As in Figure 3a, downstream of the reflection-based spatial light modulator 11, the beam envelopes of the different polarization components are indicated by the dotted line and dotted areas, respectively. Further, as in Figure 3a, upstream of the reflection-based spatial light modulator 11, the hatched area indicates that the beam comprises both polarization components.

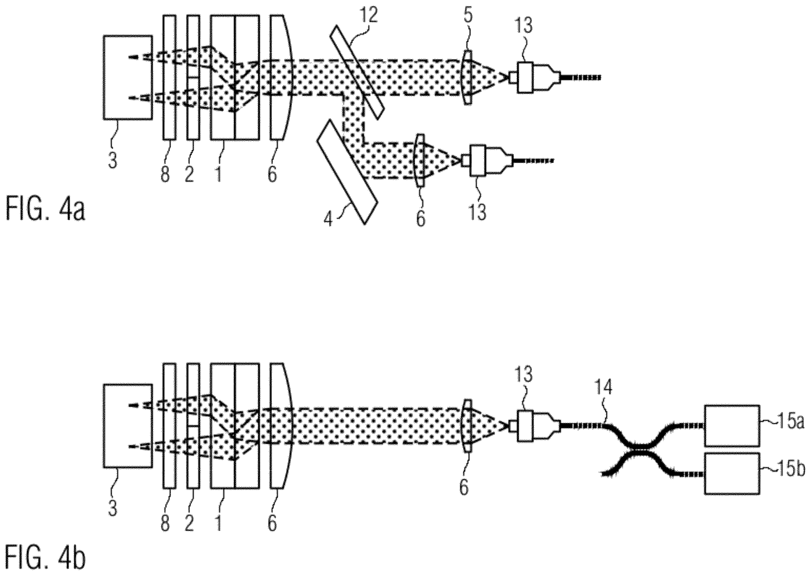

Figures 4a and 4b schematically show a beam diagram of a modification of the embodiment of an optical system 100 illustrated in Figure 2. In the embodiments shown in Figures 4a and 4b, the NOON output state of the system shown in Figure 2 can be transformed into a Bell state as described with $|\psi_4\rangle$ further above by splitting of the output beam of the embodiment of Figure 2 via frequency splitting as described further above. In particular, Figures 4a and 4b show the beam diagram downstream of the nonlinear optical element 3. As in Figure 2, the dotted areas in Figures 4a and 4b represent the respective secondary beams.

Compared to the embodiment shown in Figure 2, the optical system shown in Figure 4a further comprises a system of lenses 6, a mirror 4, a dichroic mirror 12, and single-mode fibers 13. The dichroic mirror 12 is configured to reflect one part of the spectrum of the output beam of the embodiment of Figure 2 containing either signal or idler photons, while reflecting the part of the spectrum containing the other of the signal or idler photons. It can be seen that the optical system outputs two beams, which may be represented with $|\psi_5\rangle$, which may be transformed into a Bell state represented by $|\psi_4\rangle$ as described further above. In the embodiment shown in Figure 4a, the beams are coupled into single-mode fibers 13, however, they may also be guided through free space.

The optical system shown in Figure 4b comprises a system of lenses 6, single-mode fiber 13, a fiber-based beam splitter 14, and wavelength divisor multiplexers 15a and 15b. The single-mode fiber 13 is configured to couple the output beam of the embodiment of Figure 2 into the fiber-based beam splitter 14. The fiber-based beam splitter is configured to couple the beam into the wavelength divisor multiplexers 15a and 15b, where one wavelength divisor multiplexer 15a is configured to filter out one of the wavelength ranges comprising the signal photons, and the other wavelength divisor multiplexer 15b is configured to filter out one of the wavelength ranges comprising the idler photons. It can be seen that the optical system outputs two beams, which may be represented with $|\psi_5\rangle$, which may be transformed into a Bell state represented by $|\psi_4\rangle$ as described further above.

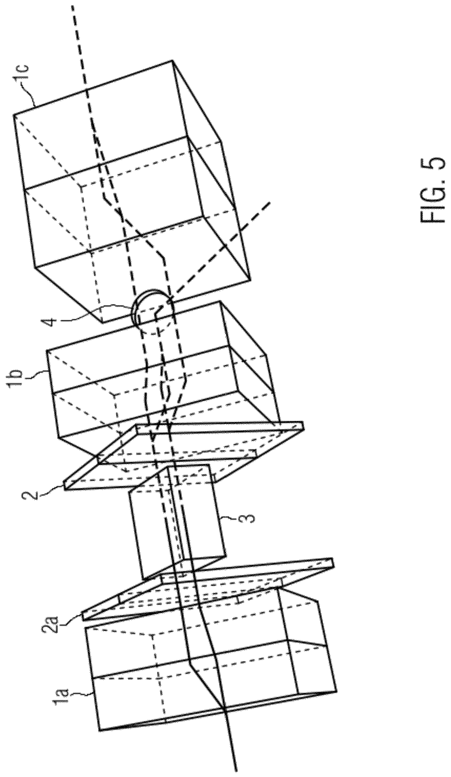

Figure 5 schematically shows a second embodiment of an optical system 100 for generating entangled photons. The optical system 100 comprises a laser 101 (not shown in Figure 5) as source for a beam of coherent light, a first Savart plate 1a, a first spatially dependent polarization rotation element 2a, a nonlinear optical material 3, a second SDPR 2b, a second SP 1b, a mirror 4, and a third SP 1c. The nonlinear optical element 3 is a monolithic nonlinear optical crystal, in which type-II SPDC can occur. The first and second SDPRs are realized as segmented half-wave plates.

In operation, the first SP 1a splits the beam of coherent light from the laser into a first pump beam and a second pump beam via a BBD transformation. The first SDPR 2a rotates the polarizations of the first and second pump beams to match the crystal axis of the nonlinear optical crystal 3. Inside the nonlinear optical crystal 3, type-II SPDC processes generate photon pairs comprising signal and idler photons. After the secondary beams exit the nonlinear optical crystal 3, the second SDPR element 2b rotates the polarizations of the secondary beams to match the axis of the second SP 1b. The second SP 1b combines the trajectories of signal photons generated by the first pump beam and idler photons generated by the second pump beam, or vice versa, via an inverse BBD transformation, such that a first polarization-entangled photonic mode is generated. At the same time, the second SP 1b displaces the trajectories of the corresponding other components of the secondary beams instead of combining them.

The first mode is coupled out via the mirror 4 upstream of the third SP 1c. The third SP 1c combines the trajectories of idler photons generated by the first pump and signal photons generated by the second pump beam, or vice versa, via a further inverse BBD transformation, such that a second polarization-entangled photonic mode is generated.

The first and second polarization-entangled modes can be represented by a Bell state as described with $|\psi_4\rangle$ further above. The Bell state can then be used for applications such as quantum cryptography or communication. It can be seen that in this case, two beams are naturally generated that can be sent to, for example, a different receiver station each, for quantum communications.

In more detail, Figure 5 illustrates that photon pairs are produced along two tracks inside the nonlinear optical crystal 3, due to the splitting of the beam of coherent light by the first SP 1a. The origin of a photon pair remains unknown if there is no temporal nor spatial walk-off. The first SDPR 2a is used before the nonlinear optical crystal 3 to match both pump beams with the nonlinear axis of the nonlinear optical crystal 3, while the second SDPR 2b is used after the nonlinear optical crystal 3 to ensure that the polarization of SPDC light (i.e., the polarization of photons generated by SPDC) from the first track is orthogonal to the polarization of SPDC light in the second track.

The second SP 1b displaces any X-polarized light in the first track and any Y-polarized light in the second track (or vice versa) such that their spatial profiles overlap significantly, i.e., they end up in a first output track. Further, the second SP 1b laterally displaces the Y-polarized (X-polarized) light from the first track and the X-polarized light from the second track into respective outer tracks. Again, "X" and "Y" denote any linear polarization (for instance Horizontal and Vertical), as long as they are orthogonal.

The mirror 4 reflects light in the first output track out of the system. The third SP 1c combines the trajectories of the, already orthogonally polarized, light in the outer tracks into a second output track. The BBD elements 1a, 1b, and 1c minimize the potential temporal and spatial walk-off between light traveling in the first and second tracks, and between the outer tracks, which enhances indistinguishability. The output state shared between the first output track and the second output track, which may be written as $|\psi'\rangle = \alpha|X_A Y_B\rangle + e^{i\phi}\beta|Y_A X_B\rangle$, may be shared by at least one pair of users.

It is to be noted that the second SDPR 2b downstream of the nonlinear optical crystal 3 allows the user to choose which photon fields to combine in both output tracks.

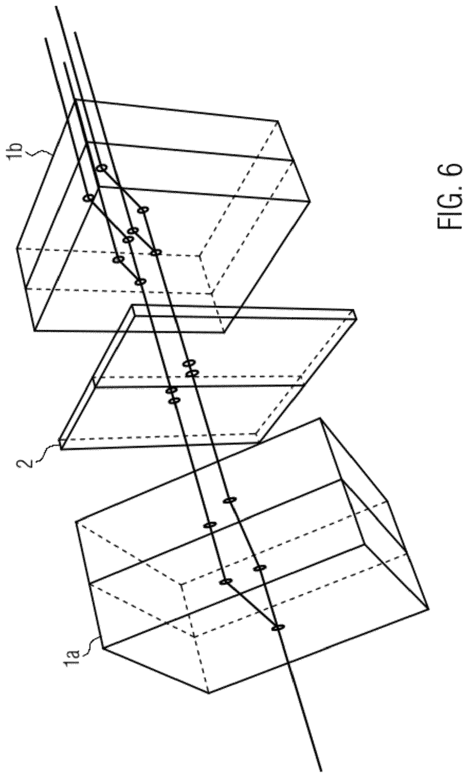

Figure 6 schematically shows an embodiment of a first BBD element comprising more than one SP. In the illustrated embodiment, the first BBD element comprises a first SP 1a, a SDPR element 2, and a second SP 1b. In operation, the first SP 1a splits the incoming beam of coherent light into a first pump beam and a second pump beam, which are displaced from the axis of the incoming first beam. The SDPR element 2 rotates the polarizations of the first and second pump beams to match the axis of the second SP 1b. The second SP 1b splits each of the first and second pump beams in two additional pump beams. The overall state after the second SP 1b may be as described with $|\psi_2\rangle$ further above. A nonlinear optical material downstream of such a first BBD element will be pumped at four different positions.

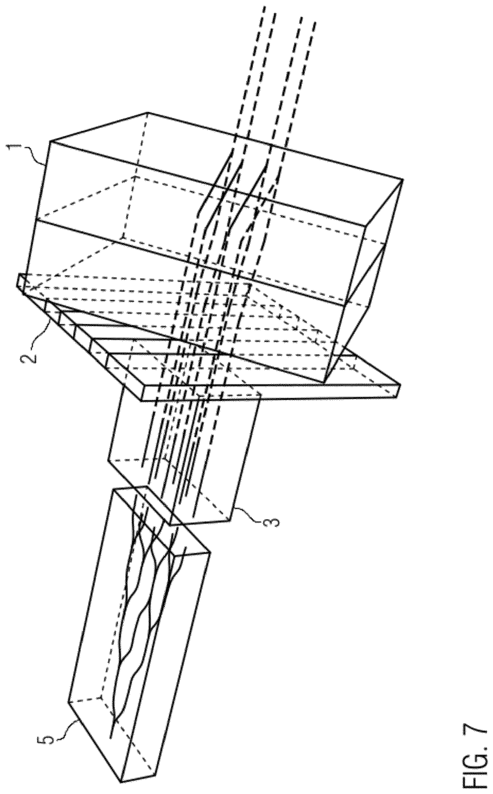

Figure 7 schematically shows another embodiment of an optical system 100 for generating entangled photons. The optical system 100 shown in Figure 7 comprises a laser 101 (not shown) as source for a beam of coherent light, a sequence of BBD elements realized as waveguides in a photonic integrated circuit 5, a nonlinear optical element 3, a SDPR 2, and a SP 1. The nonlinear optical element 3 is a monolithic nonlinear optical crystal, in which type-0, type-I, or type-II SPDC can occur. In the illustrated embodiment, the waveguides in the photonic integrated circuit 5 have been fabricated utilizing femtosecond laser writing in a glass block. In operation, the incoming beam of coherent light is split into multiple pump beams by the photonic integrated circuit 5. The pump beams interact with the nonlinear optical crystal 3 to generate photon pairs via SPDC. The SDPR element 2 rotates the polarizations of the secondary beams comprising the SPDC generated photon pairs to match the axis of the SP 1, which combines two of each of the secondary beams.

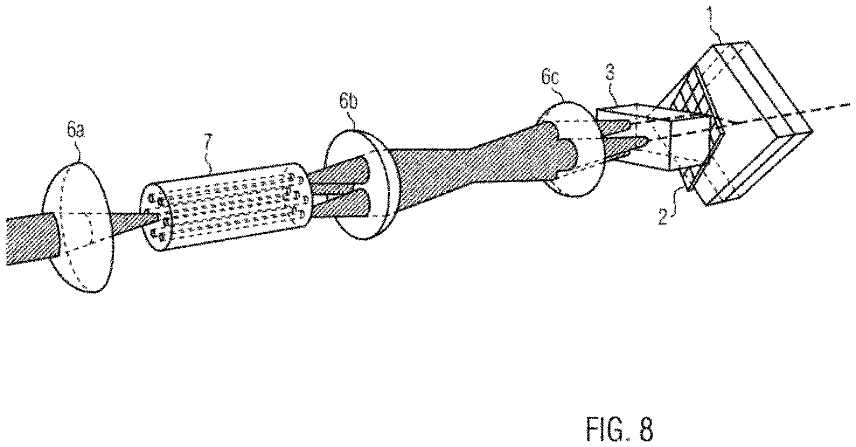

Figure 8 schematically shows another embodiment of an optical system 100 for generating entangled photons. The optical system 100 shown in Figure 8 comprises a laser 101 (not shown) as source for a beam of coherent light, a first lens 6a, a multi-core fiber 7, a second lens 6b, a third lens 6c, a nonlinear optical element 3, a SDPR 2, and a SP 1. The nonlinear optical element 3 is a monolithic nonlinear optical crystal, in which type-0, type-I, or type-II SPDC can occur. In the embodiment illustrated in Figure 8, the multi-core fiber 7 functions as first BBD element, splitting the incoming beam, which is focused via first lens 6 on the input end of the fiber, into pump beams. The pump beams are imaged with a two-lens telescope comprising second lens 6b and third lens 6c on to the nonlinear optical crystal 3. The SDPR element 2 rotates the polarizations of the pump beams comprising the SPDC generated photon pairs to match the axis of the SP 1, which combines the secondary beams.

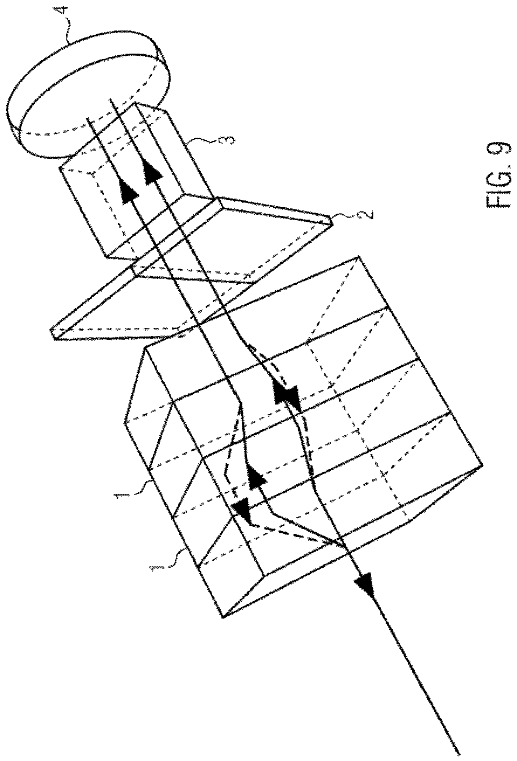

Figure 9 schematically shows another embodiment of an optical system 200 for generating entangled photons. The optical system 200 shown in Figure 9 comprises a two SPs 1 arranged directly behind one another and forming a BBD element. The optical system 200 further comprises a laser 101 (not shown) as source for a beam of coherent light, a SDPR 2, a nonlinear optical material 3, and a reflective element 4. The nonlinear optical material 3 is a monolithic nonlinear optical crystal, in which type-0, type-I, or type-II SPDC can occur.

In operation, the SPs 1 split the beam of coherent light from the laser into a first pump beam and a second pump beam into a first pump beam and a second pump beam via a BBD transformation. The first SDPR 2a rotates the polarizations of the first and second pump beams to match the crystal axis of the nonlinear optical crystal 3. Inside the nonlinear optical crystal 3, type-0 or type-I SPDC processes generate photon pairs comprising signal and idler photons. After the secondary beams exit the nonlinear optical crystal 3, the beams are reflected by the reflective element 4 such that they pass back through the nonlinear optical crystal 3, the SDPR 2, and the SPs 1. The optical components, in particular the reflective element 4, are configured in such a way that the SDPR 2 rotates the polarizations of the secondary beams to match the axis of the SPs 1 on the second pass. In this configuration, the SPs 1 combine the trajectories of photon pairs generated by the first pump beam and the trajectories of photon pairs generated by the second pump beam via an inverse BBD transformation, such that a polarization entangled photonic mode is generated.

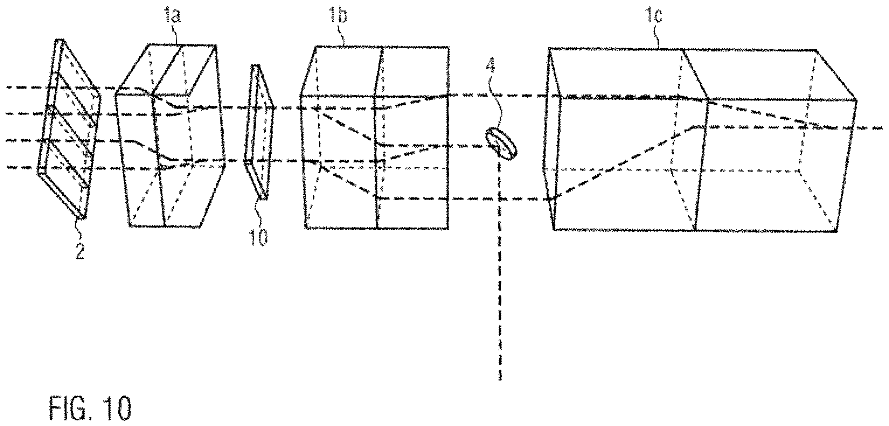

Figure 10 schematically shows a part of an optical system 100 for generating entangled photons. In particular, Figure 10 illustrates a system utilizing a time-reversed Hong-Ou-Mandel setup to generate two photonic modes A and B. The system shown in Figure 10 comprises a SDPR 2, a first SP 1a, a half-wave plate 10, a second SP 1b, a mirror 4, and a third SP 1c. The four beams shown entering the SDPR 2 are beams that have passed through a nonlinear optical element (not shown in Figure 10) and have generated photon pairs via SPDC, i.e., they are secondary beams. The four secondary beams may have been generated from an initial beam by a setup such as the setup illustrated in Figure 6.

In operation, the SDPR 2 prepares the overall state as a superposition of four spatial modes, where the first and third mode comprise two photons in a polarization state $|+\rangle$ each, and the second and fourth mode comprise two photons in a polarization state $|-\rangle$ each. As can be seen, the first SP 1a combines the first and second modes, and the third and fourth modes into a fifth and sixth mode, respectively. In other words, the fifth and sixth modes each comprise the state $|++\rangle + |--\rangle$.

The half-wave plate 10 then applies a rotation to the polarization states of the fifth and sixth modes. After this, the second SP 1b splits the fifth and sixth modes in such a way that the $|+\rangle$ polarization component of the fifth mode and the $|-\rangle$ polarization component of the sixth mode are combined in a new, central, spatial mode A. The $|-\rangle$ polarization component of the fifth mode and the $|+\rangle$ polarization component of the sixth mode are directed to new modes B1 and B2, respectively. Mode A is then directed to an output via mirror 4. The third SP 1c combines modes B1 and B2 into a new mode B. The final two spatial modes form a state which may be transformed into a Bell state represented by $|\psi_4\rangle$ as described further above.

This development was partially supported by MCIN with funding from European Union NextGenerationEU (PRTR-C17.I1) and by Generalitat de Catalunya.

## Claims

1. Optical system (100) for the generation of entangled photons comprising:

   a light source (101) configured to generate a first beam of coherent light;
   at least one first balanced beam displacement, BBD, element (1a);
   a nonlinear optical element (3) comprising a nonlinear optical material; and
   at least one second BBD element (1b);
   wherein the at least one first BBD element (1a) is configured to split the source beam into at least a first pump beam and a second pump beam upstream of the nonlinear optical element (3),
   wherein the nonlinear optical material is configured to interact via spontaneous parametric down-conversion, SPDC, with the pump beams to generate photon pairs, each photon pair comprising a signal photon and an idler photon, and
   wherein the at least one second BBD element (1b) is configured to combine the trajectories of the generated photon pairs downstream of the nonlinear optical element (3).

2. Optical system (200) for the generation of entangled photons comprising:

   a light source (101) configured to generate a first beam of coherent light;
   at least one first balanced beam displacement, BBD, element (1);
   a nonlinear optical element (3) comprising a nonlinear optical material; and
   a reflective element (4) downstream of the nonlinear optical element (3);
   wherein the at least one first BBD element (1) is configured to split the source beam into at least a first pump beam and a second pump beam upstream of the nonlinear optical element (3),
   wherein the nonlinear optical material is configured to interact via spontaneous parametric down-conversion, SPDC, with the pump beams to generate photon pairs, each photon pair comprising a signal photon and an idler photon,
   wherein the reflective element (4) is configured to reflect the generated photon pairs to pass back through the nonlinear optical element (3) and the first BBD element (1), and
   wherein the at least one first BBD element (1) is configured to combine the trajectories of the generated photon pairs.

3. Optical system (100, 200) according to claims 1 or 2, where the at least one first BBD element (1a, 1) is configured to split the first beam such that the polarization of the first pump beam is orthogonal to the polarization of the second pump beam.

4. Optical system (100, 200) according to one of the preceding claims, wherein the at least one first and/or the at least one second BBD element comprises, in particular is, a Savart Plate, SP.

5. Optical system (100, 200) according to one of the preceding claims, wherein the nonlinear optical material comprises, in particular consists of, a single monolithic nonlinear optical crystal, wherein the first pump beam and the second pump beam interact with the single monolithic nonlinear optical crystal.

6. Optical system (100, 200) according to one of the preceding claims, further comprising one or more spatially dependent polarization rotation, SDPR, elements (2), in particular one or more segmented half-wave plates and/or one or more metamaterial-based components with multiple lateral domains.

7. Optical system (100) according to any of claims 1 or 3 to 6 comprising the at least one second BBD element (1b), further comprising at least one third BBD element (1c), wherein

the at least one second BBD element (1b) is configured to combine the trajectory of a signal photon generated from the first pump beam and an idler photon generated from the second pump beam, or vice versa, to generate a first photonic mode;
the at least one second BBD element (1b) is configured to displace the trajectory of the corresponding idler photon generated from the first pump beam and the corresponding signal photon generated from the second pump beam, or vice versa, by a predetermined lateral distance; and
the at least one third BBD element (1c) is configured to combine the trajectory of the idler photon generated from the first pump beam and the trajectory of the signal idler photon generated from the second pump beam, or vice versa, to generate a second photonic mode,
wherein the first photonic mode and the second photonic mode encode a two-mode Bell state.

8. Optical system (100) according to claim 7, further comprising a first SDPR element (2a), a second SDPR element (2b), and a mirror-like element (4),

wherein the nonlinear optical material (3) is configured to generate the photon pairs via type-II SPDC conversion;
wherein the first SDPR element (2a) is arranged between the at least one first BBD element (1a) and the nonlinear optical element (3);
wherein the second SDPR element (2b) is arranged between the nonlinear optical element (3) and the at least one second BBD element (2b);
wherein the mirror-like element (4) is arranged between the at least one second BBD element (1ab) and the at least one third BBD element (1c); and
wherein the mirror-like element (4) is configured to deflect the photons of the first photonic mode such that they do not enter the at least one third BBD element (1c).

9. Optical system (100, 200) according to any of the preceding claims, further comprising a bandpass filter (8) arranged upstream, in particular directly upstream, of the nonlinear optical element (3).

10. Optical system (100, 200) according to any of the preceding claims, wherein the nonlinear optical material comprises, in particular consists of, a periodically poled crystal, in particular potassium titanyl phosphate, KTP, or lithium niobate LN.

11. Optical system (100, 200) according to any of the preceding claims, wherein the nonlinear optical material comprises, in particular consists of, a single domain crystal, in particular beta barium borate, BBO.

12. Optical system (100, 200) according to any of the preceding claims, wherein the at least one first BBD element (1, 1a) comprises one or more beam splitters (5), in particular beam splitters implemented as waveguides on a photonic integrated circuit.

13. Optical system (100, 200) according to any of the preceding claims, wherein the at least one first BBD element (1, 1a) comprises one or more multicore optical fibers.

14. Optical system (100, 200) according to any of the preceding claims, wherein a lateral separation between the first pump beam and the second pump beam, in particular a lateral separation when entering the nonlinear optical element, is between 10 $\mu$m and 10 mm, in particular between 100 $\mu$m and 2 mm.

15. Use of an optical system (100, 200) according to any of the preceding claims to generate entangled photons.

**Amended claims in accordance with Rule 137(2) EPC.**

1. Optical system (100) for the generation of entangled photons comprising:

 a light source (101) configured to generate a first beam of coherent light;
 at least one first balanced beam displacement, BBD, element (1a);
 a nonlinear optical element (3) comprising a nonlinear optical material; and
 at least one second BBD element (1b);
 wherein the at least one first BBD element (1a) is configured to split the source beam into at least a first pump beam and a second pump beam upstream of the nonlinear optical element (3),
 wherein the nonlinear optical material is configured to interact via spontaneous parametric down-conversion, SPDC, with the pump beams to generate photon pairs, each photon pair comprising a signal photon and an idler photon, and
 wherein the at least one second BBD element (1b) is configured to combine the trajectories of the generated photon pairs downstream of the nonlinear optical element (3),
 wherein the at least first BBD element (1a) and the at least second BBD element (1b) are configured to split the source beam and combine the trajectories of the generated photons, respectively, such that photon pairs that have been generated inside the nonlinear optical material (3) from separate pump beams but at or near the same position along the axial direction are combined.

2. Optical system (200) for the generation of entangled photons comprising:

 a light source (101) configured to generate a first beam of coherent light;
 at least one first balanced beam displacement, BBD, element (1);
 a nonlinear optical element (3) comprising a nonlinear optical material; and
 a reflective element (4) downstream of the nonlinear optical element (3);
 wherein the at least one first BBD element (1) is configured to split the source beam into at least a first pump beam and a second pump beam upstream of the nonlinear optical element (3),
 wherein the nonlinear optical material is configured to interact via spontaneous parametric down-conversion, SPDC, with the pump beams to generate photon pairs, each photon pair comprising a signal photon and an idler photon,
 wherein the reflective element (4) is configured to reflect the generated photon pairs to pass back through the nonlinear optical element (3) and the first BBD element (1), and
 wherein the at least one first BBD element (1) is configured to split the source beam and combine the trajectories of the generated photon pairs, respectively, such that photon pairs that have been generated inside the nonlinear optical material (3) from separate pump beams but at or near the same position along the axial direction are combined.

3. Optical system (100, 200) according to claims 1 or 2, where the at least one first BBD element (1a, 1) is configured to split the first beam such that the polarization of the first pump beam is orthogonal to the polarization of the second pump beam.

4. Optical system (100, 200) according to one of the preceding claims, wherein the at least one first and/or the at least one second BBD element comprises, in particular is, a Savart Plate, SP.

5. Optical system (100, 200) according to one of the preceding claims, wherein the nonlinear optical material comprises, in particular consists of, a single monolithic nonlinear optical crystal, wherein the first pump beam and the second pump beam interact with the single monolithic nonlinear optical crystal.

6. Optical system (100, 200) according to one of the preceding claims, further comprising one or more spatially dependent polarization rotation, SDPR, elements (2), in particular one or more segmented half-wave plates and/or one or more metamaterial-based components with multiple lateral domains.

7. Optical system (100) according to any of claims 1 or 3 to 6 comprising the at least one second BBD element (1b), further comprising at least one third BBD element (1c), wherein

the at least one second BBD element (1b) is configured to combine the trajectory of a signal photon generated from the first pump beam and an idler photon generated from the second pump beam, or vice versa, to generate a first photonic mode;

the at least one second BBD element (1b) is configured to displace the trajectory of the corresponding idler photon generated from the first pump beam and the corresponding signal photon generated from the second pump beam, or vice versa, by a predetermined lateral distance; and

the at least one third BBD element (1c) is configured to combine the trajectory of the idler photon generated from the first pump beam and the trajectory of the signal idler photon generated from the second pump beam, or vice versa, to generate a second photonic mode,

wherein the first photonic mode and the second photonic mode encode a two-mode Bell state.

8. Optical system (100) according to claim 7, further comprising a first SDPR element (2a), a second SDPR element (2b), and a mirror-like element (4),

wherein the nonlinear optical material (3) is configured to generate the photon pairs via type-II SPDC conversion;

wherein the first SDPR element (2a) is arranged between the at least one first BBD element (1a) and the nonlinear optical element (3);

wherein the second SDPR element (2b) is arranged between the nonlinear optical element (3) and the at least one second BBD element (2b);

wherein the mirror-like element (4) is arranged between the at least one second BBD element (1ab) and the at least one third BBD element (1c); and

wherein the mirror-like element (4) is configured to deflect the photons of the first photonic mode such that they do not enter the at least one third BBD element (1c).

9. Optical system (100, 200) according to any of the preceding claims, further comprising a bandpass filter (8) arranged upstream, in particular directly upstream, of the nonlinear optical element (3).

10. Optical system (100, 200) according to any of the preceding claims, wherein the nonlinear optical material comprises, in particular consists of, a periodically poled crystal, in particular potassium titanyl phosphate, KTP, or lithium niobate LN.

11. Optical system (100, 200) according to any of the preceding claims, wherein the nonlinear optical material comprises, in particular consists of, a single domain crystal, in particular beta barium borate, BBO.

12. Optical system (100, 200) according to any of the preceding claims, wherein the at least one first BBD element (1, 1a) comprises one or more beam splitters (5), in particular beam splitters implemented as waveguides on a photonic integrated circuit.

13. Optical system (100, 200) according to any of the preceding claims, wherein the at least one first BBD element (1, 1a) comprises one or more multicore optical fibers.

14. Optical system (100, 200) according to any of the preceding claims, wherein a lateral separation between the first pump beam and the second pump beam, in particular a lateral separation when entering the nonlinear optical element, is between 10 $\mu$m and 10 mm, in particular between 100 $\mu$m and 2 mm.

15. Use of an optical system (100, 200) according to any of the preceding claims to generate entangled photons.

FIG. 1

FIG. 2

EP 4 530 713 A1

FIG. 3a

FIG. 3b

FIG. 4a

FIG. 4b

FIG. 5

EP 4 530 713 A1

FIG. 6

FIG. 7

FIG. 8

FIG. 9

FIG. 10

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/037996 A1 (SPILLANE SEAN [US] ET AL) 14 February 2008 (2008-02-14) | 1,3-10, 13-15 | INV. G02F1/35 |
| Y | * abstract; claim 1; figures 8-23 * * paragraph [0072]; claims 4,7,15,19 * | 12 | |
| X | MARCO FIORENTINO ET AL: "Compact sources of polarization-entangled photons", OPTICS EXPRESS, vol. 16, no. 24, 21 November 2008 (2008-11-21), pages 20149-20156, XP055681827, DOI: 10.1364/OE.16.020149 * the whole document * | 1,3-7, 9-11,14, 15 | |
| X | ALI ANWAR ET AL: "Entangled Photon-Pair Sources based on three-wave mixing in bulk crystals", ARXIV.ORG, CORNELL UNIVERSITY LIBRARY, 201 OLIN LIBRARY CORNELL UNIVERSITY ITHACA, NY 14853, 30 July 2020 (2020-07-30), XP081729584, * the whole document * | 1-6,10, 11,14,15 | |
| A | BARBIERI M ET AL: "Complete and Deterministic discrimination of polarization Bell state assisted by momentum entanglement", ARXIV.ORG, CORNELL UNIVERSITY LIBRARY, 201 OLIN LIBRARY CORNELL UNIVERSITY ITHACA, NY 14853, 11 September 2006 (2006-09-11), XP080253850, DOI: 10.1103/PHYSREVA.75.042317 * the whole document * | 1-15 | |

**TECHNICAL FIELDS SEARCHED (IPC)**

G02F

-/--

The present search report has been drawn up for all claims

| Place of search | Date of completion of the search | Examiner |
|---|---|---|
| The Hague | 9 February 2024 | Beugin, Anne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 23 38 2998

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GIACOMO MAURO D'ARIANO ET AL: "Generating qudits with d=3,4 encoded on two-photon states", ARXIV.ORG, CORNELL UNIVERSITY LIBRARY, 201 OLIN LIBRARY CORNELL UNIVERSITY ITHACA, NY 14853, 30 March 2005 (2005-03-30), XP080182910, DOI: 10.1103/PHYSREVA.71.062337 * the whole document * | 1-15 | |
| Y,D | US 7 489 436 B1 (FIORENTINO MARCO [US] ET AL) 10 February 2009 (2009-02-10) * abstract; claim 11; figures 9-14 * | 12 | |

TECHNICAL FIELDS
SEARCHED      (IPC)

The present search report has been drawn up for all claims

| Place of search | Date of completion of the search | Examiner |
|---|---|---|
| The Hague | 9 February 2024 | Beugin, Anne |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 38 2998

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2024

| Patent document cited in search report | Publication date | Patent family member(s) | Publication date |
|---|---|---|---|
| US 2008037996 A1 | 14-02-2008 | CN 101495907 A | 29-07-2009 |
| | | EP 2047319 A2 | 15-04-2009 |
| | | JP 4842378 B2 | 21-12-2011 |
| | | JP 2009545004 A | 17-12-2009 |
| | | US 2008037996 A1 | 14-02-2008 |
| | | WO 2008013681 A2 | 31-01-2008 |
| US 7489436 B1 | 10-02-2009 | DE 112008002429 T5 | 08-07-2010 |
| | | JP 2010539524 A | 16-12-2010 |
| | | US 7489436 B1 | 10-02-2009 |
| | | WO 2009035585 A2 | 19-03-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009035585 A2

- WO 2020072005 A1

**Non-patent literature cited in the description**

- **DAVIS et al.** Writing waveguides in glass with a femtosecond laser. *Optics Letters*, 1996, vol. 21 (21), 1729-1731

- **CHEN**. Polarization Entanglement by Time-Reversed Hong-Ou-Mandel Interference. *Phys. Rev. Lett.*, vol. 121, 200502